# EUROPÄISCHE PATENTSCHRIFT

(11) **EP 3 418 072 B1**
(45) Veröffentlichungstag und Bekanntmachung des Hinweises auf die Patenterteilung: **02.11.2022**
(21) Anmeldenummer: 18166218.0
(22) Anmeldetag: 09.04.2018
(51) Int. Cl.: B60C 1/00, B29B 7/74, B60C 11/00, C08K 3/013, C08K 3/34, C08K 3/36, C08K 5/5415

(54) **KAUTSCHUKMISCHUNG UND FAHRZEUGLUFTREIFEN**
RUBBER COMPOSITION AND PNEUMATIC TYRE FOR A VEHICLE
MÉLANGE DE CAOUTCHOUC ET PNEU DE VÉHICULE

(30) Priorität: 19.06.2017 DE 102017210177
(43) Veröffentlichungstag der Anmeldung: 26.12.2018
(73) Patentinhaber: Continental Reifen Deutschland GmbH, 30165 Hannover (DE)
(72) Erfinder: PAVON SIERRA, Viktoria, 30419 Hannover (DE); MÜLLER, Norbert, 29336 Nienhagen (DE); VOIGES, Kristin, 30175 Hannover (DE); KENDZIORRA, Norbert, 30827 Garbsen (DE); WEBER, Christian, 30826 Garbsen (DE); WEHMING-BOMKAMP, Kathrin, 30161 Hannover (DE)
(74) Vertreter: Continental Corporation

(56) Entgegenhaltungen:
- EP-A1- 2 511 334
- EP-A2- 1 078 954
- US-A1- 2013 030 102
- DATABASE CA [Online] CHEMICAL ABSTRACTS SERVICE, COLUMBUS, OHIO, US; 12. Mai 2011 (2011-05-12), SATO, DAISUKE: "Rubber blend compositions for treads and their pneumatic tires", XP002785834, gefunden im STN Database accession no. 2011:586931 -& JP 2011 094012 A (SUMITOMO RUBBER IND) 12. Mai 2011 (2011-05-12)

## Beschreibung

Die Erfindung betrifft eine schwefelvernetzbare Kautschukmischung, insbesondere für Laufstreifen von Fahrzeugluftreifen, 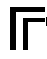 enthaltend wenigstens einen Dienkautschuk, 10 bis 100 phr zumindest eines ersten hellen Verstärkerfüllstoffes mit einer Stickstoff-Oberfläche (BET-Oberfläche) (gemäß DIN ISO 9277 und DIN 66132) von 60 bis 105 m²/g, 25 bis 250 phr zumindest eines zweiten hellen Verstärkerfüllstoffes mit einer Stickstoff-Oberfläche (BET-Oberfläche) (gemäß DIN ISO 9277 und DIN 66132) von mehr als 140 m²/g und 2,5 bis 12,5 phf zumindest eines Silan-Kupplungsagenzes, 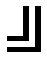 und einen Fahrzeugluftreifen.

Da die Fahreigenschaften eines Reifens, insbesondere eines Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. Durch den teilweisen oder vollständigen Ersatz des Füllstoffes Ruß durch Kieselsäure in Kautschukmischungen wurden die Fahreigenschaften in den vergangenen Jahren insgesamt auf ein höheres Niveau gebracht. Die bekannten Zielkonflikte der sich gegensätzlich verhaltenden Reifeneigenschaften bestehen allerdings auch bei kieselsäurehaltigen Laufstreifenmischungen weiterhin. So zieht eine Verbesserung des Nassgriffs und des Trockenbremsens weiterhin in der Regel eine Verschlechterung des Rollwiderstandes, der Wintereigenschaften und des Abriebverhaltens nach sich. Durch die Änderungen der Mischungszusammensetzung sollte auch die Seitenführungssteifigkeit nicht negativ beeinflusst werden.

Um die vorgenannten Zielkonflikte zu lösen, sind schon vielfältige Ansätze verfolgt worden. So hat man beispielsweise unterschiedlichste, auch modifizierte Polymere, Harze, Weichmacher und hochdisperse Füllstoffe für Kautschukmischungen eingesetzt und man hat versucht, die Vulkanisateigenschaften durch Modifikation der Mischungsherstellung zu beeinflussen.

Aus der EP 1 419 195 B1 sind z. B. Laufstreifenmischungen bekannt, die zur Verbesserung der Reifeneigenschaften Kieselsäuren mit einer niedrigen spezifischen Oberfläche (low surface area) enthalten. Die BET-Oberfläche dieser Kieselsäuren ist kleiner als 130 m²/g.

Auch in der EP 1 404 755 A1 wird zur Verbesserung der Reifeneigenschaften eine Kieselsäure mit einer niedrigen spezifischen Oberfläche in Kombination mit einem Kupplungsagens in der Laufstreifenmischung eingesetzt. Die Kieselsäure hat eine BET-Oberfläche von 60 bis 90 m²/g.

Aus der EP 3 156 443 A1 ist es ferner bekannt, eine Kieselsäure mit einer BET-Oberfläche von 115 m²/g in Kombination mit einer Kieselsäure mit einer BET-Oberfläche von 165 m²/g in einer Laufstreifenmischung für Fahrzeugreifen zu verwenden. Damit kann das Trockenhandling von Reifen verbessert werden. 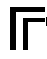

Kautschukmischungen der eingangs genannten Art sind beispielsweise aus der US 2013/0030102 A1 bekannt.

Ferner sind aus der EP 1 078 954 A2, der EP 2 511 334 A1 und der JP 2011 094012 A Kautschukmischungen bekannt, die zwei Kieselsäuren mit unterschiedlichen BET-Oberflächen aufweisen. 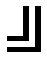

Beim Einsatz von Kieselsäuren mit niedriger spezifischer Oberfläche hat sich allerdings herausgestellt, dass sich durch deren Einsatz in Reifenlaufstreifen in der Regel der Abriebwiderstand verringert, der Reifen also schneller abgerieben wird.

Seit längerem ist es bekannt, in kieselsäurehaltigen Mischungen zur Verbesserung der Verarbeitbarkeit und zur Anbindung des polaren Füllstoffes an den Kautschuk Silan-Kupplungsagenzien zuzusetzen. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Derartige Silan-Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: - SCN, -SH, -NH2 oder -Sx- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. Die Silan-Kupplungsagenzien können dabei auch als Gemisch mit Industrieruß zugesetzt werden, wie z. B. TESPT auf Ruß (Handelsname X50S der Firma Evonik). Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT^{®} in verschiedenen Varianten von der Firma Momentive, USA, oder solche, die unter dem Namen VP Si 363 von der Firma Evonik Industries vertrieben werden.

So genannte NXT^{®} Silane werden von der Firma Momentive, USA in Kombination mit Kieselsäuren mit hoher spezifischer Oberfläche und funktionalisierten Polymeren vorgeschlagen, um eine einfache Verarbeitbarkeit von Hochleistungsmischungen zu erzielen.

Der vorliegenden Erfindung liegt nun die Aufgabe zugrunde, eine schwefelvernetzbare Kautschukmischung 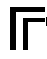 mit positiven Verarbeitungsverhalten 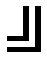 bereitzustellen, die beim Einsatz als Laufstreifenmischung zu einem niedrigem Rollwiderstand bei gleichzeitig verbesserter Seitenführungssteifigkeit führt, wobei das Abriebverhalten nicht zu stark negativ beeinflusst wird.

Gelöst wird diese Aufgabe 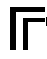 bei einer schwefelvernetzbaren 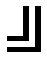 Kautschukmischung 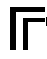 der eingangs genannten Art, dadurch dass, die Gesamtmenge an erstem hellen Verstärkerfüllstoff und zweitem hellem Verstärkerfüllstoff 90 bis 250 phr beträgt. 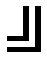

Überraschenderweise weist die erfindungsgemäße Kautschukmischung beim Einsatz im Reifen durch die spezielle Kombination der Bestandteile ein deutlich verbessertes Rollwiderstandsverhalten bei verbesserter Seitenführungssteifigkeit auf, so dass ein verbessertes Fahrverhalten erzielt werden kann. Gleichzeitig weisen Reifen mit einem Laufstreifen aus einer derartigen Mischung unerwarteter Weise auch ein verbessertes Abriebverhalten auf.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen und dadurch festen Kautschuke bezogen.

Unter hellen Verstärkerfüllstoffen versteht der Fachmann helle, mineralische Füllstoffe, die in Kautschukmischungen eine Verstärkung bewirken. Unter Verstärkung wird dabei im weitestem Sinne eine Änderung der viskoelastischen Eigenschaften eines Vulkanisats mit positiven Folgen für die Produkteigenschaften verstanden, ohne dass bei der Belastung eine Verminderung der reversiblen Dehnung bzw. eine Schädigung des Netzwerkes erfolgt. Zu den hellen Verstärkerfüllstoffen z. B. gefällte Silikate, gefällte Kieselsäuren und pyrogene Kieselsäuren.

Die in dieser Schrift verwendete Angabe phf (parts per hundred parts of filler by weight) ist dabei die in der Kautschukindustrie gebräuchliche Mengenangabe für Kupplungsagenzien für Füllstoffe. Im Rahmen der vorliegenden Anmeldung bezieht sich phf auf die vorhandenen hellen Verstärkerfüllstoffe, das heißt, dass andere eventuell vorhandene Füllstoffe wie Ruß nicht in die Berechnung der Menge an Silan-Kupplungsagens mit eingehen.

Die erfindungsgemäße Kautschukmischung enthält wenigstens einen Dienkautschuk. Demnach können auch mehrere Kautschuke im Verschnitt eingesetzt werden.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Bei dem wenigstens einen Dienkautschuk handelt es sich um natürliches Polyisopren und/oder synthetisches Polyisopren und/oder Polybutadien (Butadien-Kautschuk) und/oder Styrol-Butadien-Copolymer (Styrol-Butadien-Kautschuk) und/oder epoxidiertes Polyisopren und/oder Styrol-Isopren-Kautschuk und/oder Halobutyl-Kautschuk und/oder Polynorbornen und/oder Isopren-Isobutylen-Copolymer und/oder Ethylen-Propylen-Dien-Kautschuk und/oder Nitril-Kautschuk und/oder Chloropren-Kautschuk und/oder AcrylatKautschuk und/oder Fluor-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydrierten Acrylnitrilbutadien-Kautschuk und/oder hydrierten Styrol-Butadien-Kautschuk.

Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen vorzugsweise bei der Herstellung von technischen Gummiartikeln, wie Gurten, Riemen, Schläuchen und/oder Schuhsohlen zum Einsatz.

Bevorzugt handelt es sich bei dem oder den Dienkautschuk(en) jedoch um natürliches Polyisopren (NR) und/oder synthetisches Polyisopren (IR) und/oder Polybutadien (BR, Butadien-Kautschuk) und/oder Styrol-Butadien-Copolymer (SBR, Styrol-Butadien-Kautschuk).

Bei dem natürlichen und/oder synthetischen Polyisopren kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren; der cis-1,4-Anteil im Naturkautschuk ist größer 99 Gew.-%.

Ferner ist auch ein Gemisch eines oder mehrerer natürlicher Polyisoprene mit einem oder mehreren synthetischen Polyisoprenen denkbar.

Bei dem Styrol-Butadien-Kautschuk (Styrol-Butadien-Copolymer) kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet. Bevorzugt sind in jedem Fall Styrol-Butadien-Copolymere mit einem Mw von 250000 bis 600000 g/mol (zweihundertfünfzigtausend bis sechshunderttausend Gramm pro Mol).

Das oder die eingesetzte(n) Styrol-Butadien-Copolymere kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder SiloxanGruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Bei dem Butadien-Kautschuk (BR, Polybutadien) kann es sich um alle dem Fachmann bekannten Typen mit einem Mw von 250000 bis 5000000 g/mol handeln. Darunter fallen u. a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z. B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt.

Das eingesetzte Polybutadien kann ebenfalls mit den oben beim Styrol-Butadien-Kautschuk genannten Modifizierungen und Funktionalisierungen endgruppenmodifiziert und/oder entlang der Polymerketten funktionalisiert sein.

Die schwefelvernetzbare Kautschukmischung enthält 10 bis 100 phr, vorzugsweise 10 bis 75 phr, zumindest eines ersten hellen Verstärkerfüllstoffes mit

einer Stickstoff-Oberfläche (BET-Oberfläche) (gemäß DIN ISO 9277 und DIN 66132) von 60 bis 105 m²/g, besonders bevorzugt mit einer Stickstoff-Oberfläche (BET-Oberfläche) (gemäß DIN ISO 9277 und DIN 66132) von 60 bis 95 m²/g. Die CTAB-Oberflächen (gemäß ASTM D 3765) solcher Verstärkerfüllstoffe liegen dabei in der Regel bei weniger als 95 m²/g, vorzugsweise zwischen 50 und 95 m²/g. Die Oberfläche dieser Verstärkerfüllstoffe liegt in unteren Bereich solcher Füllstoffe, sie werden daher auch als "low surface area" Verstärkerfüllstoffe bezeichnet. Es können auch mehrere helle Verstärkerfüllstoffe mit dieser Oberflächencharakteristik gleichzeitig in der Mischung eingesetzt werden.

Ein besonders ausgewogenes Verhältnis der gewünschten Eigenschaften erhält man, wenn der zumindest eine erste helle Verstärkerfüllstoff ausgewählt ist aus der Gruppe bestehend aus Kieselsäure und Silikat.

Vorzugsweise ist der zumindest eine erste helle Verstärkerfüllstoff eine Kieselsäure. Damit kann bei Verwendung der Kautschukmischung als Reifenlaufstreifen ein besonders positives Verhalten im Hinblick auf den Abrieb erzielt werden. Zum Einsatz kann z. B. Zeosil^{®}1085 der Firma Solvay, Frankreich kommen. Die Kieselsäure hat eine Stickstoff-Oberfläche (BET-Oberfläche) (gemäß DIN ISO 9277 und DIN 66132) von weniger als 105 m²/g und vorzugsweise eine CTAB-Oberfläche (gemäß ASTM D 3765) von weniger als 95 m²/g.

Zur Erzielung eines besonders niedrigen Rollwiderstandes bei Einsatz der Kautschukmischung als Reifenlaufstreifen hat es sich als vorteilhaft erwiesen, wenn der zumindest ein erste helle Verstärkerfüllstoff ein Silikat ist. Bei den einsetzbaren Silikaten kann es sich zum Beispiel um Aluminium-, Calcium- oder Magnesiumsilikate handeln, die auch oberflächenbehandelt sein können. Vorzugsweise wird ein gefälltes Natrium-Aluminium-Silikat eingesetzt. Zum Einsatz kann z. B. Ultrasil^{®} AS 7 der Firma Evonik Industries, Deutschland kommen.

Die schwefelvernetzbare Kautschukmischung enthält ferner 25 bis 250 phr zumindest eines zweiten hellen Verstärkerfüllstoffes mit einer Stickstoff-Oberfläche (BET-Oberfläche) (gemäß DIN ISO 9277 und DIN 66132) von mehr als 140 m²/g, vorzugsweise mit einer Stickstoff-Oberfläche (BET-Oberfläche) (gemäß DIN ISO 9277 und DIN 66132) von 150 bis 295 m²/g. Die CTAB-Oberflächen (gemäß ASTM D 3765) solcher Verstärkerfüllstoffe liegen dabei in der Regel bei mehr als 130 m²/g, vorzugsweise zwischen 140 und 285 m²/g. Die Oberfläche dieser Verstärkerfüllstoffe liegt in oberen Bereich solcher Füllstoffe, sie werden daher auch als "high surface area" Verstärkerfüllstoffe bezeichnet. Es können auch mehrere helle Verstärkerfüllstoffe mit dieser Oberflächencharakteristik gleichzeitig in der Mischung eingesetzt werden.

Der oder die zweiten hellen Verstärkerfüllstoffe können aus allen bekannten hellen Verstärkerfüllstoffen mit entsprechender Oberfläche, wie z. B. gefällten Silikaten, gefällten Kieselsäuren und pyrogenen Kieselsäuren, ausgewählt werden. Vorzugsweise ist der zumindest eine zweite helle Verstärkerfüllstoff eine Kieselsäure. Damit kann bei Verwendung der Kautschukmischung für Reifenlaufstreifen ein besonders ausgewogenes Verhältnis der Eigenschaften Rollwiderstand und Abrieb erzielt werden. Zum Einsatz kann z. B. Zeosil^{®}1165 der Firma Solvay, Frankreich kommen.

Als positiv für das Verarbeitungsverhalten und die späteren Mischungseigenschaften hat es sich erwiesen, wenn die Gesamtmenge an erstem hellen Verstärkerfüllstoff und zweitem hellen Verstärkerfüllstoff 90 bis 250 phr beträgt.

Erfindungsgemäß enthält die Kautschukmischung 2,5 bis 12,5 phf, vorzugsweise 3,5 bis 12,5 phf, zumindest eines Silan-Kupplungsagenzes. Dabei können ein oder mehrere dem Fachmann bekannten Silan-Kupplungsagenzien zum Einsatz kommen. Zu diesen zählen beispielsweise 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden. Die Silan-Kupplungsagenzien können dabei auch als Gemisch mit Industrieruß zugesetzt werden, wie z. B. TESPT auf Ruß (Handelsname X50S der Firma Evonik). Auch geblockte oder ungeblockte Mercaptosilane können als Silan-Kupplungsagens eingesetzt werden. Unter ungeblockten Mercaptosilanen sind Silane zu verstehen, die eine -S-H-Gruppe aufweisen, also ein Wasserstoffatom am Schwefelatom. Unter geblockten Mercaptosilanen sind Silane zu verstehen, die eine S-SG-Gruppe aufweisen, wobei SG die Abkürzung für eine Schutzgruppe am Schwefelatom ist. Bevorzugte Schutzgruppen sind Acylgruppen. Ein Beispiel für ein geblocktes Mercaptosilan ist 3-Octanoylthio-1-propyltriethoxysilan.

Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT^{®} in verschiedenen Varianten von der Firma Momentive, USA, oder solche, die unter dem Namen VP Si 363 von der Firma Evonik Industries vertrieben werden.

Dem Fachmann ist klar, dass sich die Mengenangabe der Silan-Kupplungsagenzien auf den Anfangszustand der Bestandteile der schwefelvernetzbaren Kautschukmischung bezieht und während des Mischvorgangs und/oder der Vulkanisation die Schutzgruppen abgespalten werden und die jeweiligen Schwefelatome chemisch reagieren.

Neben den bereits ausführlich erläuterten, erfindungswesentlichen Bestandteilen, kann die Kautschukmischung weitere, in der Kautschukindustrie übliche Bestandteile enthalten. Derartige Bestandteile werden im Folgenden erläutert:
Die Kautschukmischung kann als weiteren Füllstoff Ruß enthalten. Es sind alle dem Fachmann bekannten Ruß-Typen denkbar. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist. Hiermit werden für die Anwendung im Fahrzeugreifen besonders gute Rollwiderstandsindikatoren (Rückprallelastizität bei 70°C) bei guten sonstigen Reifeneigenschaften erzielt.

Die erfindungsgemäße Kautschukmischung kann neben den hellen Verstärkerfüllstoffen und Ruß noch weitere bekannte Füllstoffe, wie Kreide, Stärke, Magnesiumoxid, Titandioxid oder Kautschukgele, enthalten. Weiterhin sind Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen) denkbar. Auch Graphit und Graphene sowie sogenannte "carbon-silica dual-phase filler" sind als Füllstoff denkbar. Zinkoxid gehört im Rahmen der vorliegenden Erfindung nicht zu den Füllstoffen.

In der Kautschukmischung können Weichmacher in Mengen von 1 bis 90 phr, bevorzugt von 5 bis 70 phr, besonders bevorzugt von 15 bis 60 phr, enthalten sein. Geringe Mengen an Weichmacher werden im Wesentlichen im Hinblick auf eine besonders gute Prozessierbarkeit der Kautschukmischung, insbesondere der Extrudate vor der Vernetzung, zugesetzt, während hohe Mengen an Weichmacher im PKW-Reifenbereich zur Einstellung der Mischungshärte dienen.

Als Weichmacher können alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Weichmacherharze oder Flüssig-Polymere, wie flüssiges Polybutadien - auch in modifizierter Form - eingesetzt werden. Der oder die Weichmacher werden bei der Herstellung der erfindungsgemäßen Kautschukmischung bevorzugt in wenigstens einer Grundmischstufe zugegeben.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z. B. Zinkethylhexanoat,
c) Wachse,
d) Mastikationshilfsmittel, wie z. B. 2,2'-Dibenzamidodiphenyldisulfid (DBD) und
e) Verarbeitungshilfsmittel, wie z. B. Fettsäuresalze, wie z. B. Zinkseifen, und Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe finden sich auch 0,1 bis 10 phr, bevorzugt 1 bis 8 phr, besonders bevorzugt 1,5 bis 4 phr, Zinkoxid (ZnO).

Hierbei kann es sich um alle dem Fachmann bekannten Typen an Zinkoxid handeln, wie z. B. ZnO-Granulat oder -Pulver. Das herkömmlicherweise verwendete Zinkoxid weist in der Regel eine BET-Oberfläche von weniger als 10 m²/g auf. Es können aber auch Zinkoxide mit einer BET-Oberfläche von 10 bis 100 m²/g, wie z. B. so genannte "nano-Zinkoxide", verwendet werden.

Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert.

Die Kautschukmischung kann auch Haftsysteme wie z. B. Cobalt-Salze und Verstärkerhärze (z. B. Resorcin-HMMM/HMT) zum Einsatz in Body-Mischungen, insbesondere Gummierungsmischungen, enthalten.

Die Vulkanisation der erfindungsgemäßen schwefelvernetzbaren Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).

Außerdem kann die Kautschukmischung Vulkanisationsverzögerer enthalten.

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe bestehend aus z. B. Thiuramdisulfiden, wie z. B. Tetrabenzylthiuramdisulfid (TBzTD), Tetramethylthiuramdisulfid (TMTD) oder Tetraethylthiuramdisulfid (TETD), Thiuramtetrasulfiden, wie z. B. Dipentamethylenthiuramtetrasulfid (DPTT), Dithiophosphaten, wie z. B. DipDis (Bis-(Diisopropyl)thiophosphoryldisulfid), Bis(O,O-2-ethylhexyl-thiophosphoryl)Polysulfid (z. B. Rhenocure SDT 50^{®}, Rheinchemie GmbH, Zinkdichloryldithiophosphat (z. B. Rhenocure ZDT/S^{®}, Rheinchemie GmbH) oder Zinkalkyldithiophosphat, und 1,6-Bis(N,N-dibenzylthiocarbamoyldithio)hexan und Diarylpolysulfiden und Dialkylpolysulfiden.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Das letztere System enthält ein Vulkanisationsmittel, welches mit einer Funktionalität größer vier vernetzt und zumindest einen Vulkanisationsbeschleuniger.

Im Rahmen der vorliegenden Erfindung werden Schwefel und Schwefelspender, inklusive schwefelspendende Silane wie TESPT, und Vulkanisationsbeschleuniger wie oben beschrieben und Vulkanisationsmittel, die mit einer Funktionalität größer vier vernetzen, wie in der WO 2010/049216 A2 beschrieben, sowie die oben genannten Systeme Vulkuren^{®}, Duralink^{®} und Perkalink^{®} begrifflich als Vulkanisationsmittel zusammengefasst.

Der erfindungsgemäßen Kautschukmischung wird bei deren Herstellung bevorzugt wenigstens ein Vulkanisationsmittel ausgewählt aus der Gruppe bestehend aus Schwefel, Schwefelspender, Vulkanisationsbeschleuniger und Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung, insbesondere für die Anwendung im Fahrzeugluftreifen, herstellen.

Die Begriffe "vulkanisiert" und "vernetzt" werden im Rahmen der vorliegenden Erfindung synonym verwendet.

Die Herstellung der erfindungsgemäßen schwefelvernetzbaren Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die Kautschukmischung kann für unterschiedlichste Gummiartikel, wie Bälge, Förderbänder, Luftfedern, Gurte, Riemen, Schläuche oder Schuhsohlen eingesetzt werden.

Vorzugsweise findet die Kautschukmischung jedoch Anwendung in Fahrzeugreifen, wobei darunter Fahrzeugluftreifen und Vollgummireifen, inklusive Reifen für Industrie- und Baustellenfahrzeuge, LKW-, PKW- sowie Zweiradreifen zu verstehen sind.

Gemäß einer bevorzugten Ausgestaltung der Erfindung wird die Kautschukmischung als Bauteil eines Fahrzeugluftreifens eingesetzt.

Einen Fahrzeugluftreifen mit verbesserter Seitenführungssteifigkeit und verbessertem Rollwiderstand einem Abriebverhalten auf guten Niveau erhält man, wenn der Laufstreifen die erfindungsgemäße Kautschukmischung aufweist. Handelt es sich bei dem Laufstreifen um einen mit einer Cap/Base-Konstruktion, weist vorzugsweise die Cap die erfindungsgemäße Mischung auf. Unter "Cap" ist im Rahmen der vorliegenden Erfindung der mit der Fahrbahn in Berührung kommende Teil des Laufstreifens zu verstehen, der radial außen angeordnet ist (Laufstreifenoberteil oder Laufstreifencap). Unter "Base" ist im Rahmen der vorliegenden Erfindung der Teil des Laufstreifens zu verstehen, der radial innen angeordnet ist, und somit im Fahrbetrieb nicht oder nur am Ende des Reifenlebens mit der Fahrbahn in Berührung kommt (Laufstreifenunterteil oder Laustreifenbase).

Die erfindungsgemäße Kautschukmischung ist ferner auch für Laufstreifen geeignet, die aus verschiedenen nebeneinander und/oder untereinander angeordneten Laufstreifenmischungen bestehen (Multikomponentenlaufstreifen).

Zur Verwendung als Laufstreifen in Fahrzeugluftreifen wird die Mischung als Fertigmischung vor der Vulkanisation in die Form eines Laufstreifens, bevorzugt wenigstens in die Form einer Laufstreifencap, gebracht und bei der Herstellung des Fahrzeugreifenrohlings wie bekannt aufgebracht. Der Laufstreifen, bevorzugt wenigstens die Laufstreifencap, kann aber auch in Form eines schmalen Kautschukmischungsstreifens auf einen Reifenrohling aufgewickelt werden. Bei zweigeteilten Laufstreifen (oberer Teil: Cap und unterer Teil: Base) kann die erfindungsgemäße Kautschukmischung sowohl für die Cap als auch für die Base verwendet werden.

Die Erfindung soll nun anhand von Vergleichs- und Ausführungsbeispielen, die in der Tabelle 1 zusammengefasst sind, näher erläutert werden.

Die Vergleichsmischungen sind dabei mit V, die erfindungsgemäßen Mischungen sind mit E gekennzeichnet.

Die Mischungsherstellung erfolgte nach den in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde. Die Mischungen sind durch entsprechende Anpassung der Weichmacherdosierung härtegleich eingestellt.

Aus sämtlichen Mischungen wurden Prüfkörper durch Vulkanisation über 20 min unter Druck bei 160 °C hergestellt und mit diesen Prüfkörpern die Shore-A-Härte bei Raumtemperatur (RT) gemäß DIN ISO 7619-1 ermittelt.

Es wurden Reifen der Dimension 205/55 R16 gebaut, deren Laufstreifen die Mischungen der Tabelle 1 aufwiesen, und mit diesen Reifen folgende Tests durchgeführt:
- Seitenführungssteifigkeit: Bestimmung auf Trommel bei 4100 N Last, Geschwindigkeit 40 km/h, bei Raumtemperatur
- Rollwiderstand: gemäß ISO 28580
- Abrieb: Gewichtsverlust der jeweiligen Reifen nach 8800 km Straßenfahrt bei einer mittleren Temperatur von + 15 °C.
- Nassbremsen: ABS-Bremsen aus 80 km/h, nasser Asphalt, niedriges µ (low µ)
- Trockenbremsen: ABS-Bremsen aus 100 km/h, trockener Asphalt, hohes µ (high µ)

Die ermittelten Werte wurden in Performance (Leistung) umgerechnet, wobei die Vergleichsmischung V1 bei jeder getesteten Reifeneigenschaft auf 100 % Performance normiert wurde. Die Reifeneigenschaften der anderen Mischungen beziehen sich dann auf diese Mischung V1. Hierbei bedeuten Werte kleiner 100 % eine Verschlechterung in den Eigenschaften, während Werte größer 100 % eine Verbesserung darstellen.

**Tabelle 1**

| **Bestandteile** | **Einheit** | **1(V)** | **2(V)** | **3(E)** | **4(V)** | **5(E)** |
|---|---|---|---|---|---|---|
| Naturkautschuk | phr | 15 | 15 | 15 | 15 | 15 |
| BR | phr | 20 | 20 | 20 | 20 | 20 |
| S-SBR^{a} | phr | 65 | 65 | 65 | 65 | 65 |
| RußN121 | phr | 8 | 8 | 8 | 8 | 8 |
| Verstärkerfüllstoff A^{b} | phr | 120 | | 60 | | 60 |
| Verstärkerfüllstoff B^{c} | phr | - | 120 | 60 | - | - |
| Verstärkerfüllstoff C^{d} | phr | - | - | - | 120 | 60 |
| Weichmacher | phr | 55 | 35 | 43 | 30 | 42 |
| Silan-Kupplungsagens^{e} | phr | 12,2 | 12,2 | 12,2 | 12,2 | 12,2 |
| Alterungsschutzmittel | phr | 7,1 | 7,1 | 7,1 | 7,1 | 7,1 |
| Zinkoxid | phr | 2 | 2 | 2 | 2 | 2 |
| Stearinsäure | phr | 1 | 1 | 1 | 1 | 1 |
| Beschleuniger | phr | 4,49 | 4,49 | 4,49 | 4,49 | 4,49 |
| Schwefel | phr | 0,57 | 0,57 | 0,57 | 0,57 | 0,57 |
| Shore A-Härte bei RT | ShoreA | 58 | 61 | 60 | 62 | 60 |

| **Reifeneigenschaften** | | | | | | |
|---|---|---|---|---|---|---|
| Seitenführungssteifigkeit | % | 100 | 103 | 103 | 106 | 104 |
| Rollwiderstand | % | 100 | 112 | 109 | 117 | 115 |
| Abrieb | % | 100 | 85 | 96 | 74 | 92 |
| Nassbremsen | % | 100 | 96 | 97 | 92 | 94 |
| Trockenbremsen | % | 100 | 101,5 | 101,4 | 99 | 100 |

| | | | | | | |
|---|---|---|---|---|---|---|
| ^{a)} lösungspolymerisiertes Styrol-Butadien-Copolymer ^{b)} Zeosil^{®} 1165 MP, CTAB 160 m²/g, BET 165 m²/g, Fa. Solvay ^{c)} Zeosil^{®} 1085 MP, CTAB 80 m²/g, BET 90 m²/g, Fa. Solvay ^{d)} Ultrasil^{®} AS 7, BET 65 m²/g, Fa. Evonik ^{e)} S2-Silan: TESPD | | | | | | |

Aus der Tabelle 1 wird ersichtlich, dass nur bei Kombination der beiden unterschiedlichen hellen Verstärkerfüllstoffe in der Mischung mit Silan-Kupplungsagens überraschenderweise die Seitenführungsteifigkeit und der Rollwiderstand verbessert kann, ohne dass das Abriebverhalten stark verschlechtert wird. Dieser Effekt war keinesfalls aus den Einzelmaßnahmen zu erwarten, denn der alleinige Austausch einer Kieselsäure mit großer spezifischer Oberfläche (Zeosil^{®} 1165 MP) gemäß Mischung 1(V) gegen eine Kieselsäure mit niedriger spezifischer Oberfläche (Zeosil^{®}1085 MP) gemäß Mischung 2(V) führt zu einer deutlichen Verschlechterung des Abriebverhaltens (85 %). Diesen Effekt in noch stärkerer Form beobachtet man beim vollständigen Austausch einer Kieselsäure mit großer spezifischer Oberfläche (Zeosil^{®} 1165 MP) gemäß Mischung 1(V) gegen ein Natrium-Aluminium-Silikat (Ultrasil^{®} AS 7) mit niedriger spezifischer Oberfläche (Ultrasil^{®} AS 7) gemäß Mischung 4(V). Hier erhält man nur noch eine Abriebperformance von 74 %. Erst bei Kombination der unterschiedlichen hellen Verstärkerfüllstoffe gemäß den Mischungen 3(E) und 5(E) verbleibt der Abrieb erstaunlicherweise auf einem Niveau über 90 %. Auch die Seitenführungsteifigkeit und der Rollwiderstand verbessern sich bei den erfindungsgemäßen Mischungen stärker als es der vollständige Austausch der Verstärkerfüllstoffe erwarten ließ. Positiv ist auch zu bemerken, dass das Nassbremsen und das Trockenbremsen auf dem Niveau der Vergleichsmischung 1(V) verblieben, hier also keine Nachteile in Kauf genommen werden müssen.

Die Mischung 3(E) mit der Kombination von Zeosil^{®} 1165 MP mit Zeosil^{®}1085 MP zeichnet sich durch ein besonders gutes Abriebverhalten aus. Die Mischung 5(E) mit der Kombination von Zeosil^{®} 1165 MP mit Ultrasil^{®} AS 7 besticht durch einen besonders niedrigen Rollwiderstand.

## Patentansprüche

1. Schwefelvernetzbare Kautschukmischung, enthaltend
- wenigstens einen Dienkautschuk,
- 10 bis 100 phr zumindest eines ersten hellen Verstärkerfüllstoffes mit einer Stickstoff-Oberfläche (BET-Oberfläche) (gemäß DIN ISO 9277 und DIN 66132) von 60 bis 105 m²/g,
- 25 bis 250 phr zumindest eines zweiten hellen Verstärkerfüllstoffes mit einer Stickstoff-Oberfläche (BET-Oberfläche) (gemäß DIN ISO 9277 und DIN 66132) von mehr als 140 m²/g und
- 2,5 bis 12,5 phf zumindest eines Silan-Kupplungsagenzes,
**dadurch gekennzeichnet, dass** die Gesamtmenge an erstem hellen Verstärkerfüllstoff und zweitem hellem Verstärkerfüllstoff 90 bis 250 phr beträgt.

2. Kautschukmischung nach Anspruch 1, **dadurch gekennzeichnet, dass** sie 10 bis 75 phr des zumindest einen ersten hellen Verstärkerfüllstoffes enthält.

3. Kautschukmischung nach zumindest einem der vorhergehenden Ansprüche, **dadurch gekennzeichnet, dass** der zumindest eine erste helle Verstärkerfüllstoff ausgewählt ist aus der Gruppe bestehend aus Kieselsäure und Silikat.

4. Kautschukmischung nach Anspruch 4, **dadurch gekennzeichnet, dass** der zumindest eine erste helle Verstärkerfüllstoff eine Kieselsäure ist.

5. Kautschukmischung nach Anspruch 4, **dadurch gekennzeichnet, dass** der zumindest eine erste helle Verstärkerfüllstoff ein Silikat ist.

6. Kautschukmischung nach zumindest einem der vorhergehenden Ansprüche, **dadurch gekennzeichnet, dass** der zumindest eine zweite helle Verstärkerfüllstoff eine Stickstoff-Oberfläche (BET-Oberfläche) (gemäß DIN ISO 9277 und DIN 66132) von 150 bis 295 m²/g aufweist.

7. Kautschukmischung nach zumindest einem der vorhergehenden Ansprüche, **dadurch gekennzeichnet, dass** der zumindest eine zweite helle Verstärkerfüllstoff eine Kieselsäure ist.

8. Fahrzeugluftreifen, der wenigstens ein Bauteil aufweist, welches zumindest zum Teil aus einer mit Schwefel vulkanisierten Kautschukmischung nach zumindest einem der Ansprüche 1 bis 7 besteht.

9. Fahrzeugluftreifen nach Anspruch 8, **dadurch gekennzeichnet, dass** es sich bei dem Bauteil zumindest um den Laufstreifen handelt.

## Claims

1. Sulfur-crosslinkable rubber mixture containing
- at least one diene rubber,
- 10 to 100 phr of at least one light-colored reinforcing filler having a nitrogen surface area (BET surface area) (according to DIN ISO 9277 and DIN 66132) of 60 to 105 m²/g,
- 25 to 250 phr of at least one second light-colored reinforcing filler having a nitrogen surface area (BET surface area) (according to DIN ISO 9277 and DIN 66132) of more than 140 m²/g and
- 2.5 to 12.5 phf of at least one silane coupling agent,
**characterized in that** the total amount of first light-colored reinforcing filler and second light-colored reinforcing filler is 90 to 250 phr.

2. Rubber mixture according to Claim 1, **characterized in that** it contains 10 to 75 phr of the at least one first light-colored reinforcing filler.

3. Rubber mixture according to at least one of the preceding claims, **characterized in that** the at least one light-colored reinforcing filler is selected from the group consisting of silica and silicate.

4. Rubber mixture according to Claim 4, **characterized in that** the at least one first light-colored reinforcing filler is a silica.

5. Rubber mixture according to Claim 4, **characterized in that** the at least one first light-colored reinforcing filler is a silicate.

6. Rubber mixture according to at least one of the preceding claims, **characterized in that** the at least one second light-colored reinforcing filler has a nitrogen surface area (BET surface area) (according to DIN ISO 9277 and DIN 66132) of 150 to 295 m²/g.

7. Rubber mixture according to at least one of the preceding claims, **characterized in that** the at least one second light-colored reinforcing filler is a silica.

8. Pneumatic vehicle tire comprising at least one component which at least partially consists of a sulfur-vulcanized rubber mixture according to at least one of Claims 1 to 7.

9. Pneumatic vehicle tire according to Claim 8, **characterized in that** the component is at least the tread.

## Revendications

1. Mélange de caoutchouc réticulable au soufre, contenant
- un caoutchouc diène,
- 10 à 100 phr d'au moins une première charge de renfort claire ayant une aire par adsorption d'azote (aire BET) (selon DIN ISO 9277 et DIN 66132) de 60 à 105 m²/g,
- 25 à 250 phr d'au moins une seconde charge claire de renfort ayant une aire par adsorption d'azote (aire BET) (selon DIN ISO 9277 et DIN 66132) supérieure à 140 m²/g et
- 2,5 à 12,5 phr d'au moins un agent de couplage de type silane,
**caractérisé en ce que** la quantité totale de la première charge claire de renfort et de la seconde charge claire de renfort est de 90 à 250 phr.

2. Mélange de caoutchouc selon la revendication 1, **caractérisé en ce qu'**il contient 10 à 75 phr de l'au moins une première charge claire de renfort.

3. Mélange de caoutchouc selon au moins l'une des revendications précédentes, **caractérisé en ce que** l'au moins une première charge claire de renfort est choisie dans le groupe consistant en une silice et un silicate.

4. Mélange de caoutchouc selon la revendication 4, **caractérisé en ce que** l'au moins une première charge claire de renfort est une silice.

5. Mélange de caoutchouc selon la revendication 4, **caractérisé en ce que** l'au moins une première charge claire de renfort est un silicate.

6. Mélange de caoutchouc selon au moins l'une des revendications précédentes, **caractérisé en ce que** l'au moins une seconde charge claire de renfort présente une aire par adsorption d'azote (aire BET) (selon DIN ISO 9277 et DIN 66132) de 150 à 295 m²/g.

7. Mélange de caoutchouc selon au moins l'une des revendications précédentes, **caractérisé en ce que** l'au moins une seconde charge claire de renfort est une silice.

8. Pneu de véhicule, qui comprend au moins un composant qui au moins en partie est constitué d'un mélange de caoutchouc vulcanisé au soufre selon l'une des revendications 1 à 7.

9. Pneu de véhicule selon la revendication 8, **caractérisé en ce que**, pour ce qui concerne le composant, il s'agit d'au moins la bande de roulement.
